# EUROPEAN PATENT APPLICATION

(11) **EP 2 597 750 A1**
(43) Date of publication of application: **29.05.2013**
(21) Application number: 12193562.1
(22) Date of filing: 21.11.2012
(51) Int. Cl.: H02J 9/06, H04L 12/10, H05B 37/03

(54) **Monitoring and management network and processing unit for control and power supply elements of emergency lighting devices**

(30) Priority: 28.11.2011 IT BO20110679
(71) Applicant: Schneider Electric Industrie Italia S.p.A., 02100 Vazia (Rieti) (IT)
(72) Inventor: Montaguti, Alberto, 44042 Cento Fe (IT)
(74) Representative: Modiano, Micaela Nadia

(57) **Abstract**

A monitoring and management network, for control and power supply elements of emergency lighting devices. The elements are selected preferably from uninterruptible power supplies (2), for supplying power to at least one respective lighting device of the type of a non-self-powered lamp (3a), devices (4) for managing the power delivered by the uninterruptible power supplies (2), first controllers (5) for the non-self-powered lamps (3a), second controllers (6) for the degree of charge of energy storage devices and for the functionalities of at least one lighting device of the type of a self-powered lamp (3b).

The network comprises at least one data processing unit (7), which is provided at least with an RS232 port, for connection, via a respective first transmission branch (8), to at least one respective RS232 port of the uninterruptible power supply (2); an RS485 port, for connection, via a respective second transmission branch (9), to at least one respective RS485 port of the second controller (6); an RS232/RS485 conversion function, for connection between the first controller (5) and the respective uninterruptible power supply (2) and/or for connection between the first branch (8) and the second branch (9); a microprocessor (10) provided with a software card for storing and analyzing data which are transmitted via the first branch (8) and the second branch (9) and convey information relating to the status of the elements and of the devices, to the available residual energy level, and to any operating problems for each device, and the like; means for connection to at least one interface (11), for displaying data of tests performed by the processing unit (7) and the history of the events relating to each element, for their consequent centralized diagnosis and supervision.

## Description

The present invention relates to a monitoring and management network, and processing unit, for control and power supply elements of emergency lighting devices.

As is known, nowadays the use of emergency lighting devices is very widespread. These are lamps designed to indicate escape routes, lamps for emergency lighting, or other, similar devices, which to a greater or lesser extent are adapted to ensure lighting in the event of an outage and/or to ensure the safety of people inside buildings, in particular in the event of a disaster or fire, that is, events in which it is necessary to ensure the possibility of immediate egress to a safe environment outside.

Numerous types of lamps are thus available, which are capable of meeting different requirements, and not infrequently the need arises to deploy a plurality of such devices, of heterogeneous types, inside and/or in the environs of the building, for the purpose of ensuring the necessary safety of people, in so doing complying with obligations which are often laid down by national or supranational reference standards.

The very nature of the task of ensuring lighting under the conditions of an event that is accidental and unpredictable requires constant monitoring of the level of power with which the lamps are supplied, and this result is achieved, according to conventional methods, by way of a plurality of dedicated components, each one of which is designed to control a respective lamp (for self-powered lamps) or a respective uninterruptible power supply (which supplies power to corresponding lamps that do not have their own power supply).

For example, the use is widespread of components such as dedicated controllers, which are adapted to monitor the level of energy of self-powered lamps (i.e. provided with a battery), or devices specifically designed for the management and control of power output by uninterruptible power supplies.

Such an implementation solution is not however devoid of drawbacks.

It is precisely the diversity of lamps to be monitored, and as a consequence the plethora of different components (such as those described above) dedicated to controlling (and supplying) the power, that requires, for each lamp and for the respective control and power supply elements, the adoption of a dedicated architecture for reading (and optionally transmission and display) of the data and of the status of the elements.

It thus seems evident that such necessity, with the increase in the number of lamps (and of respective components for power supply and control), results in the adoption of a very large number of elements which differ from each other, rendering the monitoring of the various lamps complex and inconvenient. Yet this operation is essential in order to ensure their constant and optimal operation.

The aim of the present invention is to solve the above-mentioned problems, by providing a monitoring and management network, for control and power supply elements of lamps and other lighting devices, which has a simple architecture and a small number of components that differ from each other.

Within this aim, an object of the invention is to provide a processing unit that enables the monitoring and management of lamps and other lighting devices, in a simple and versatile manner.

Another object of the invention is to provide a network that enables monitoring and management without requiring laborious activities of personnel.

Another object of the invention is to provide a network that is versatile.

A further object of the invention is to provide a control and management device that ensures a high reliability of operation.

Another object of the invention is to provide a control and management device that is safely applied.

This aim and these objects are achieved by a monitoring and management network, for control and power supply elements of emergency lighting devices, said elements being selected from uninterruptible power supplies, for supplying power to at least one respective lighting device of the type of a non-self-powered lamp, devices for managing the power delivered by the uninterruptible power supplies, first controllers for the non-self-powered lamps, second controllers for the quantity of charge of energy storage devices and for the functionalities of at least one lighting device of the type of a self-powered lamp, **characterized in that** it comprises at least one data processing unit, which is provided at least with: an RS232 port, for connection, via a respective first transmission branch, to at least one respective RS232 port of the uninterruptible power supply; an RS485 port, for connection, via a respective second transmission branch, to at least one respective RS485 port of the second controller; an RS232/RS485 conversion function, for connection between the first controller and the respective uninterruptible power supply and/or for connection between said first branch and said second branch; a microprocessor provided with a software card for storing and analyzing data which are transmitted via said first branch and said second branch and convey information related to the status of said elements and said devices, to the available residual energy level, and to any operating problems for each device, and the like; means for connection to at least one interface, for displaying data of tests performed by said processing unit and the history of the events related to each element, for their consequent centralized diagnosis and supervision.

This aim and these objects are also achieved by a monitoring and management processing unit, for control and power supply elements of emergency lighting devices, said elements being selected from uninterruptible power supplies, for supplying power to at least one respective lighting device of the type of a non-self-powered lamp, devices for managing the power delivered by the uninterruptible power supplies, first controllers for the non-self-powered lamps, second controllers for the quantity of charge of energy storage devices and for the functionalities of at least one lighting device of the type of a self-powered lamp, **characterized in that** it comprises at least: an RS232 port, for connection, via a respective first transmission branch, to at least one respective RS232 port of the uninterruptible power supply; an RS485 port, for connection, via a respective second transmission branch, to at least one respective RS485 port of the second controller; an RS232/RS485 conversion function, for connection between the first controller and the respective uninterruptible power supply and/or for connection between said first branch and said second branch; a microprocessor provided with a software card for storing and analyzing data which are transmitted via said first branch and said second branch and convey information relating to the status of the elements and of the devices, to the available residual energy level, and to any operating problems for each device, and the like; means for connection to at least one interface, for displaying data of tests performed and the history of the events related to each element, for their consequent centralized diagnosis and supervision.

Further characteristics and advantages of the invention will become more apparent from the description of six preferred, but not exclusive, embodiments of the network according to the invention, illustrated by way of non-limiting example in the accompanying drawings wherein:
Figure 1 is a block diagram of the monitoring and management network according to the invention, in a first embodiment;
Figure 2 is a block diagram of the monitoring and management network according to the invention, in a second embodiment;
Figure 3 is a block diagram of the monitoring and management network according to the invention, in a third embodiment;
Figure 4 is a block diagram of the monitoring and management network according to the invention, in a fourth embodiment;
Figure 5 is a block diagram of the monitoring and management network according to the invention, in a fifth embodiment;
Figure 6 is a block diagram of the monitoring and management network according to the invention, in a sixth embodiment.

With reference to the figures, the monitoring and management network according to the invention, generally designated by the reference numeral 1, is adapted for application to control and power supply elements of emergency lighting devices.

More specifically, the aforementioned elements are selected preferably from: uninterruptible power supplies 2, which are capable of supplying power to at least one respective lighting device of the type of a non-self-powered lamp 3a, devices 4 for managing the power delivered by such uninterruptible power supplies 2, first controllers 5 for the non-self-powered lamps 3a, second controllers 6 for the degree of charge of energy storage devices (for example batteries, of the conventional type or otherwise) and for the functionalities of at least one lighting device of the type of a self-powered lamp 3b.

It should be noted from this point onward that the use of the network 1 for the control and management of elements controlled by lighting devices which are constituted by lamps 3a, 3b constitutes the preferred application of the present invention, and constant reference will therefore be made to such preferred application hereinafter.

Whatever the type of power supply for the lamps 3a, 3b, and with further reference to the preferred, but not exclusive, application, they can be constituted by lamps 3a, 3b for security lighting, lamps 3a, 3b used for emergency lighting, lamps 3a, 3b for indicating escape routes, other types of emergency lamps 3a, 3b, used to ensure lighting in the event of an outage and/or to enable the identification of escape routes from buildings in the event of fire and other disasters such as to require the immediate evacuation of the building (often in the event of a sudden outage of the ordinary mains electricity supply).

The possibility is not ruled out moreover (while remaining within the scope of protection claimed herein) of utilization of the network 1 according to the invention in different application sectors, according to specific requirements.

According to the invention, the network 1 comprises at least one data processing unit 7, which is provided first with an RS232 port, for connection, via a respective first transmission branch 8, to at least one respective RS232 port of the uninterruptible power supply 2 and an RS485 port, for connection, via a respective second transmission branch 9, to at least one respective RS485 port of the second controller 6.

Moreover, the processing unit 7 comprises an RS232/RS485 conversion function, so as to enable the processing unit 7 (which is conveniently located in the network 1) to allow the connection between the first controller 5 and the respective uninterruptible power supply 2 and/or the connection between the first branch 8 and the second branch 9.

In addition, the processing unit 7 comprises a microprocessor 10 which is provided with a software card for storing and analyzing data which are transmitted via the first branch 8 and the second branch 9. Such data can thus convey information relating to the status of the elements (the uninterruptible power supplies 2, the management devices 4, the first controllers 5 and the second controllers 6) and the devices by which the elements are controlled (the non-self-powered lamps 3a and the self-powered lamps 3b), to the available residual energy level, and to any operating problems for each device, and the like.

The processing unit 7 also comprises means for connection to at least one user interface 11, which thus makes it possible to display the above-mentioned data, in addition to tests performed by the processing unit 7 and the history of the events relating to each element, for their consequent centralized diagnosis and supervision, with immediate identification of any problems, located at any point of the network 1.

It should in fact be clarified that the software card can also be capable of performing automatic tests, which are adapted to interrogate the status of each element and device (and thus of the power available to them).

According to a first configuration of the network 1, cited for the purposes of non-limiting example of the application of the invention, the network 1 comprises two processing units 7. A first processing unit 7 is in fact interposed between the first controller 5 and the respective uninterruptible power supply 2, for their mutual connection. Moreover, a second processing unit 7 is connected via the first branch 8 to the uninterruptible power supply 2 and via the second branch 9 to the second controller 6, in order to collect the data originating from each element and device arranged along the network 1 and thus be able to analyze them by way of the aforementioned software card.

Such second processing unit 7 is moreover associated, by way of the connection means, with the user interface 11.

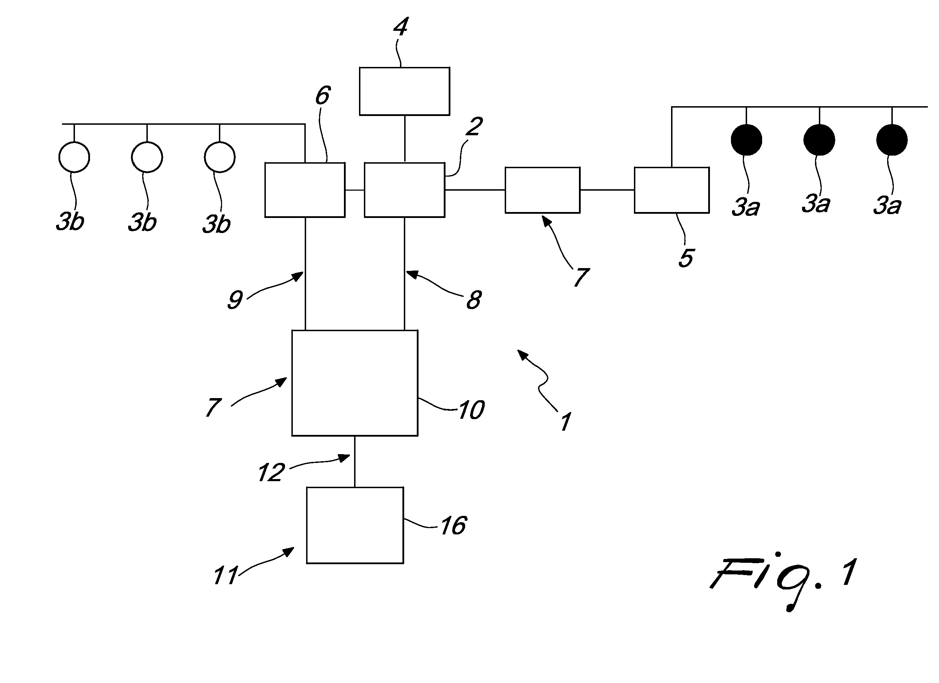

More specifically, in a first embodiment shown for the purposes of non-limiting example in Figure 1, the connection means comprise an LAN connector, in order to be able to provide, between the second processing unit 7 and the interface 11, a TCP/IP connection 12 ("socket" protocol), for dedicated supervision programs.

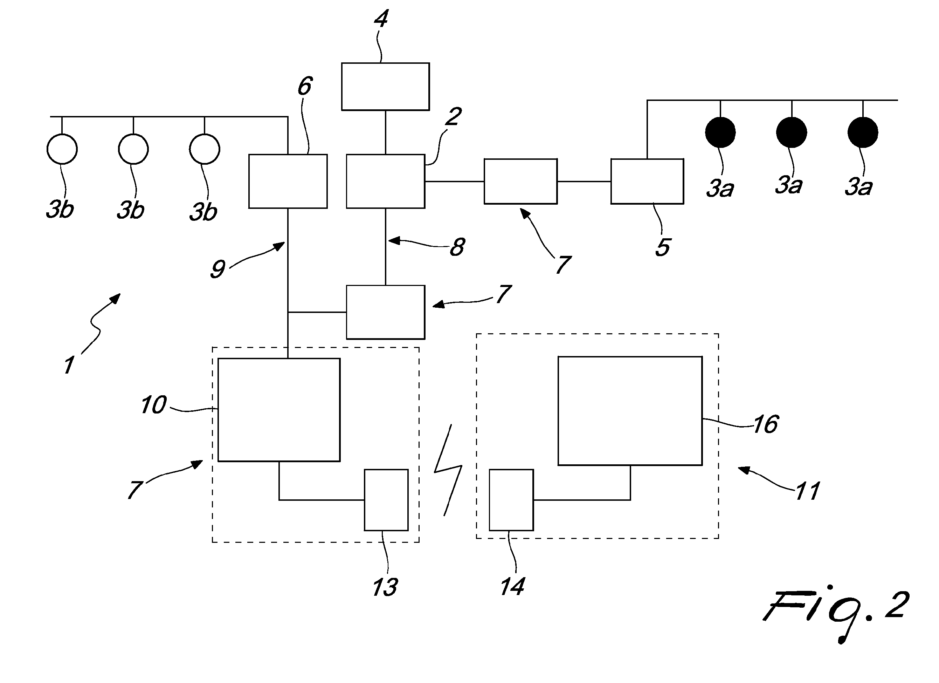

Conveniently, the monitoring and management network 1 according to the invention can comprise at least one first processing unit 7 and a second processing unit 7 which are arranged and configured as described in the previous paragraphs, and a third processing unit 7 (visible in Figures 2 to 6), which is arranged along the first branch 8 in order to take advantage of its RS232/RS485 conversion function, and thus provide the connection of the first branch 8 to the second branch 9, which leads to the RS485 port of the second processing unit 7.

The presence of the third processing unit 7 makes it possible to send to the second processing unit 7 all the data and the information originating from the various elements via the RS485 port of the latter only.

Conveniently, in a second embodiment, shown in Figure 2, the connection means comprise a first modem 13 which is preferably selected from a PSTN modem and a GSM modem, comprised in the second processing unit 7, for the transmission of data to a second modem 14, preferably selected respectively from a PSTN modem and a GSM modem (thus of the same type as the first modem 13), comprised in the interface 11.

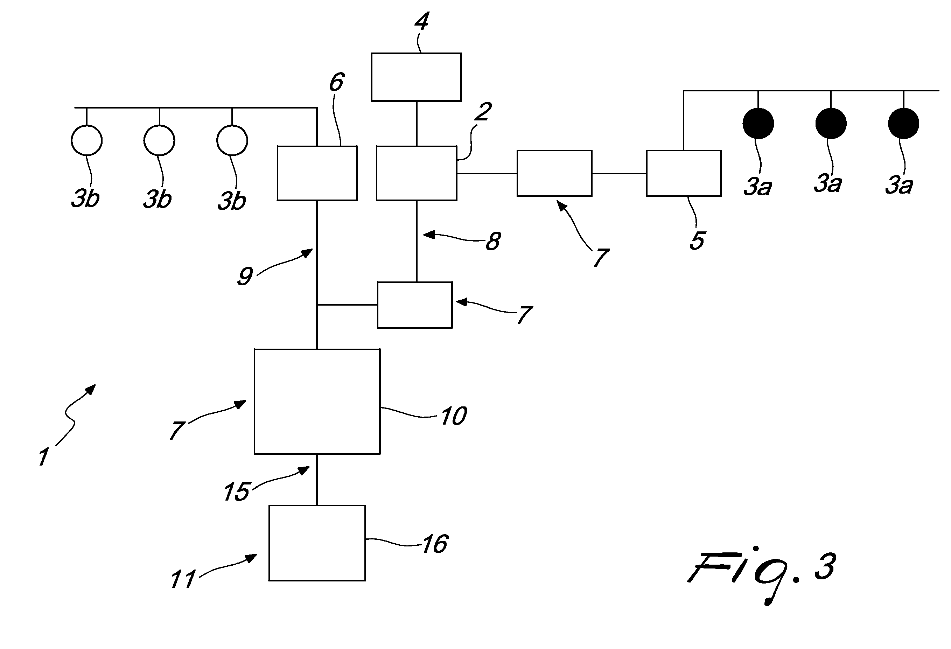

Alternatively, in a third embodiment shown in Figure 3, the connection means comprise a direct connector for wired connection 15 between the RS232 port of the second processing unit 7 and the interface 11.

Advantageously, the interface 11 can comprise a personal computer 16, provided with a corresponding screen, which makes it possible to display web pages on a browser which describe statuses and the respective changes, as well as the available power levels, the tests and the history.

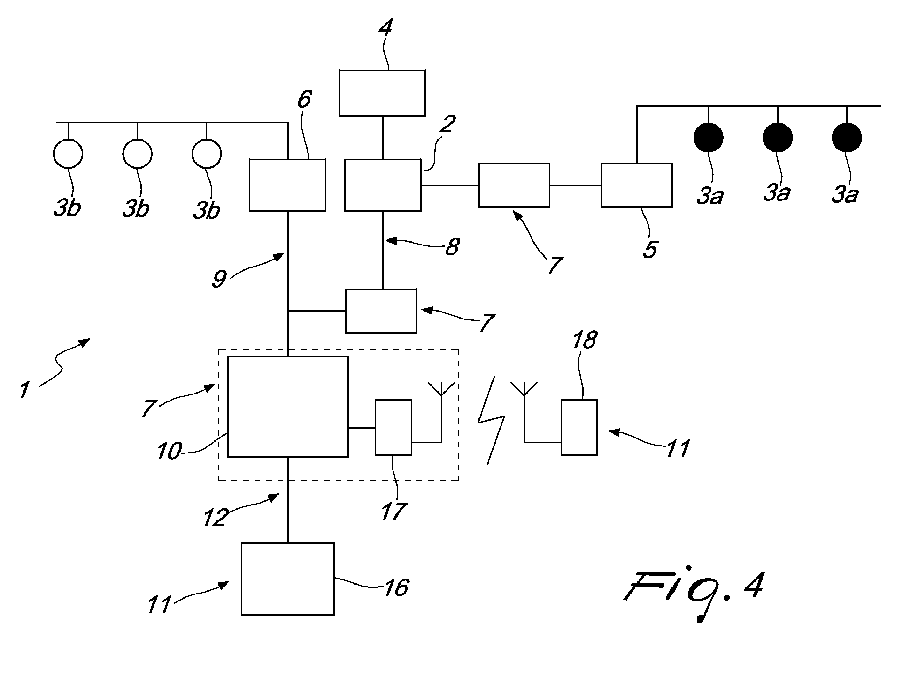

Positively, in a fourth embodiment of the network 1 according to the invention, shown in Figure 4, the connection means comprise the LAN connector, for providing first of all a TCP/IP connection 12 between the second processing unit 7 and a first interface 11, which is provided with a personal computer 16 of the type indicated above, and a third modem 17, of the type of a GSM modem, also comprised in the second processing unit 7, for sending messages, of the type of SMS messages, to a second interface 11, of the type of a cellular telephone 18. The messages displayed on the cellular phone 18 can thus convey information relating to the status of the elements and of the emergency devices, to the respective status changes, to the available residual power levels, to the tests and to the history.

The configuration proposed above thus makes it possible to display salient data and information on a personal computer 16 and on a cellular phone 18.

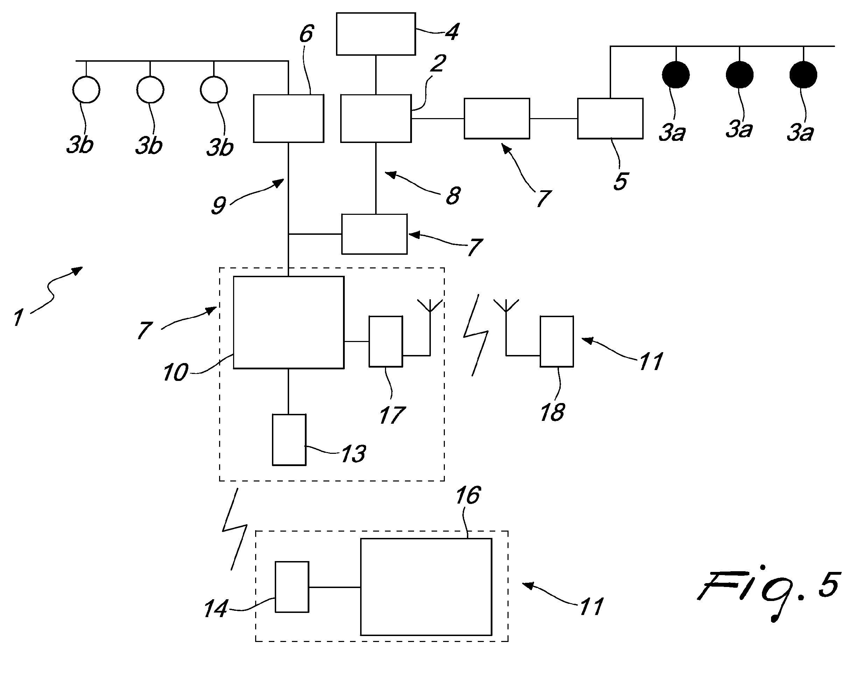

The configuration proposed in Figure 5, for the purposes of non-limiting example, also makes this result possible: in the network 1 shown in that figure in fact, the connection means comprise both the first modem 13, which is preferably selected from a PSTN modem and a GSM modem and is comprised in the second processing unit 7, for the transmission of data to a second modem 14 (which is also preferably selected from a PSTN modem and a GSM modem, respectively, and which is comprised in a first interface 11, provided with a personal computer 16), and also a third modem 17, of the type of a GSM modem, for sending messages, of the type of SMS messages, to a second interface 11, of the type of a cellular telephone 18. Again, the messages can thus convey information relating to the status of the elements and of the emergency devices, to the respective status changes, to the available residual power levels, to the tests and to the aforementioned history.

The software card of the processing unit 7 can moreover have programs for managing the sending of data to the cellular phone 18, so that a user can choose the logic with which the sending occurs (thus setting parameters such as the frequency of sending, or choosing to perform the sending only when preset events arise relating to the elements and to the devices, such as for example the energy level sinking below a safety threshold).

It should be noted moreover that the processing unit 7 can also send information via email (naturally in cases where the processing unit 7 has an internet connection) both to the personal computer 16 and to the cellular phone 18.

Conveniently, the processing unit 7 can comprise a module for relaying and regenerating the RS485 signal, for the configuration of the processing unit 7 in slave mode and for extending the supervision that can be obtained by way of adoption of the processing unit 7 (or of a plurality of processing units 7).

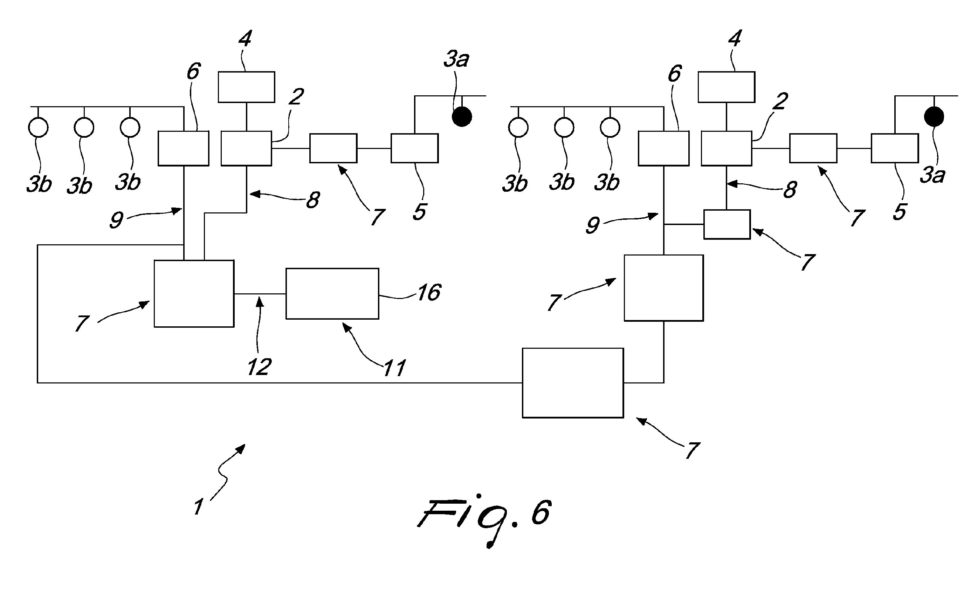

In this connection, Figure 6 shows a possible sixth embodiment of the network 1 according to the invention, which is provided with six processing units 7, some of which are configured in slave mode (and the others in master mode), precisely in order to allow the supervision of a particularly large number of elements and lamps 3a, 3b (which may also be distributed over very large areas, up to a range of a few kilometers).

It should be noted that the various embodiments described and illustrated are not exhaustive of the various configurations of the network 1 according to the invention which are comprised in the scope of protection claimed herein. In particular, the lamps 3a, 3b can be any in number, according to specific applicative requirements, as can the uninterruptible power supplies 2, the devices 4 and the controllers 5, 6, and consequently the processing units 7 and the mutual connections.

The network 1 according to the invention is thus capable of managing a plurality of elements and devices such as the ones mentioned above, by deploying conveniently a multiplicity of processing units 7 of the type described above. It is precisely the use of the processing unit 7 alone, duplicated multiple times and optionally configured in various ways, that ensures the simplicity of the architecture of the network 1 according to the invention, thus achieving the set aim.

Thanks to the various elements with which they are provided, the processing units 7 are capable of performing various functionalities (which would otherwise be performed by various components that differ from each other and are mutually connected, in conventional networks) as a function of the particular requirement, and of the specific element/device to be monitored, thus ensuring great versatility.

In fact, as has been seen, it is possible to use a first processing unit 7 in order to mutually connect a first controller 5 and the respective uninterruptible power supply 2, so as to enable mutual dialog, while a third processing unit 7 can connect the first branch 8 and the second branch 9 in order to convert the signal conveying the information and transmit it to a second processing unit 7 via the RS485 port alone.

Moreover, the second processing unit 7 can manage, store and monitor the flow of information received according to various methods, in order to then send that information to an interface 11 according to various methods: via the RS232 port and the RS485 port, via a TCP/IP connection 12 (socket protocol), web server, email and SMS notifications, remote connection via modem (GSM and/or PSTN), etc.

A user can thus monitor, in a practical and easy manner, the information relating to the status of each element (and of each lighting device), the respective changes of status, the available energy level, significant events etc., by displaying such information on the screen of the personal computer 16 and/or by being alerted on his or her cellular phone 18 (without thus needing to resort to laborious verification activities) of the outcome of the tests performed (automatically or otherwise) by the processing unit 7 and of the occurrence of salient events (with the option to configure the parameters governing type of event and sending methods).

This makes it possible to constantly ensure control of a plurality of lamps 3a, 3b, which are deployed in various parts of a building or over an area of greater or lesser extension, ensuring for each one of such lighting devices the maximum of efficiency and their maintenance in optimal operating condition, in order to deal with possible emergencies, with a simple architecture (constituted substantially by a plurality of processing units 7, which are conveniently deployed).

The processing unit is adapted to monitor and manage control and power supply elements of emergency lighting devices, the elements being selected preferably from uninterruptible power supplies 2, for supplying power to at least one respective lighting device of the type of a non-self-powered lamp 3a, devices 4 for managing the power delivered by the uninterruptible power supplies 2, first controllers 5 for the non-self-powered lamps 3a, second controllers 6 for the degree of charge of energy storage devices and for the functionalities of at least one lighting device of the type of a self-powered lamp 3b.

According to the invention, the processing unit 7 comprises an RS232 port, for connection, via a respective first transmission branch 8, to at least one respective RS232 port of the uninterruptible power supply 2 and an RS485 port, for connection, via a respective second transmission branch 9, to at least one respective RS485 port of the second controller 6.

Moreover, the processing unit 7 is provided with an RS232/RS485 conversion function, for connection between the first controller 5 and the respective uninterruptible power supply 2 and/or for connection between the first branch 8 and the second branch 9, as well as a microprocessor 10 provided with a software card for storing and analyzing data which are transmitted via the first branch 8 and the second branch 9 and convey information relating to the status of the elements and of the devices, to the available residual energy level, and to any operating problems for each device, and the like.

In addition, the processing unit 7 is provided with means for connection to at least one interface 11, for displaying data of tests performed and the history of the events relating to each element, for their consequent centralized diagnosis and supervision.

By way of the deployment of various units of the same processing unit 7 (which is therefore singular in terms of architecture and structure) at the key connection points of a network 1, it is possible to monitor and manage, in a practical and easy manner, a plurality of lamps 3a, 3b and the elements controlled by them. In fact the presence of many functionalities in the processing unit 7 allows a plurality of different configurations and uses, highlighting the versatility of the processing unit 7 and its adaptability to different architectures and applicative requirements.

In practice it has been found that the network and processing unit according to the invention achieves the set aim, in that the adoption of processing units provided with a plurality of elements and functionalities makes it possible to use any number thereof for monitoring various control and power supply elements of emergency lighting devices, with a simple architecture and with a very low number of components that differ from each other.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

The disclosures in Italian Patent Application No. BO2011A000679 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A monitoring and management network, for control and power supply elements of emergency lighting devices, said elements being selected preferably from uninterruptible power supplies (2), for supplying power to at least one respective lighting device of the type of a non-self-powered lamp (3a), devices (4) for managing the power delivered by the uninterruptible power supplies (2), first controllers (5) for the non-self-powered lamps (3a), second controllers (6) for the degree of charge of energy storage devices and for the functionalities of at least one lighting device of the type of a self-powered lamp (3b), **characterized in that** it comprises at least one data processing unit (7), which is provided at least with:
- an RS232 port, for connection, via a respective first transmission branch (8), to at least one respective RS232 port of the uninterruptible power supply (2);
- an RS485 port, for connection, via a respective second transmission branch (9), to at least one respective RS485 port of the second controller (6);
- an RS232/RS485 conversion function, for connection between the first controller (5) and the respective uninterruptible power supply (2) and/or for connection between said first branch (8) and said second branch (9);
- a microprocessor (10) provided with a software card for storing and analyzing data which are transmitted via said first branch (8) and said second branch (9) and convey information relating to the status of the elements and of the devices, to the available residual energy level, and to any operating problems for each device, and the like;
- means for connection to at least one interface (11), for displaying data of tests performed by said processing unit (7) and the history of the events relating to each element, for their consequent centralized diagnosis and supervision.

2. The monitoring and management network according to claim 1, **characterized in that** it comprises at least two of said processing units (7), a first processing unit (7) being interposed between the first controller (5) and the respective uninterruptible power supply unit (2), for their mutual connection, a second processing unit (7) being connected via said first branch (8) to the uninterruptible power supply (2) and via said second branch (9) to the second controller (6), said second processing unit (7) being associated with said interface (11) by virtue of said connection means.

3. The monitoring and management network according to claims 1 and 2, **characterized in that** said connection means comprise an LAN connector, for a TCP/IP connection (12) between said second processing unit (7) and said interface (11).

4. The monitoring and management network according to claims 1 and 2, **characterized in that** it comprises at least said first processing unit (7), said second processing unit (7) and a third processing unit (7), which is arranged along said first branch (8) for its connection to said second branch (9), which leads to the RS485 port of said second processing unit (7).

5. The monitoring and management network according to claim 4, **characterized in that** said connection means comprise a first modem (13), preferably selected from a PSTN modem and a GSM modem, comprised in said second processing unit (7), for the transmission of data to a second modem (14), which is preferably selected from a PSTN modem and a GSM modem, respectively, comprised in said interface (11).

6. The monitoring and management network according to claim 4 and as an alternative to claim 5, **characterized in that** said connection means comprise a direct connector for wired connection (15) between the RS232 port of said second processing unit (7) and said interface (11).

7. The monitoring and management network according to one or more of the preceding claims, **characterized in that** said interface (11) comprises a personal computer (16), provided with a corresponding screen, for displaying web pages on a browser which describe said statuses and the respective changes, said available power levels, said tests and said history.

8. The monitoring and management network according to one or more of the preceding claims, **characterized in that** said connection means comprise said LAN connector, for the TCP/IP connection (12) between said second processing unit (7) and a first interface (11), which comprises said personal computer (16), and a third modem (17), of the type of a GSM modem, which is comprised in said second processing unit (7), for sending messages, of the type of SMS messages, to a second interface (11), of the type of a cellular telephone (18), said messages conveying information relating to the status of the elements and of the emergency devices, to the respective status changes, to the available residual power levels, to said tests and to said history.

9. The monitoring and management network according to one or more of claims 1 to 7 and as an alternative to claim 8, **characterized in that** said connection means comprise said first modem (13), which is selected preferably from a PSTN modem and a GSM modem, comprised in said second processing unit (7), for the transmission of data to a second modem (14), preferably selected from a PSTN modem and a GSM modem, respectively, which is comprised in a first interface (11), provided with said personal computer (16), and a third modem (17), of the type of a GSM modem, for sending messages, of the type of SMS messages, to a second interface (11), of the type of a cellular telephone (18), said messages conveying information relating to the status of the elements and of the emergency devices, to the respective status changes, to the available residual power levels, to said tests and to said history.

10. The monitoring network according to one or more of the preceding claims, **characterized in that** said processing unit (7) comprises a module for relaying and regenerating the RS485 signal for its configuration in slave mode and for extending supervision.

11. A monitoring and management processing unit for control and power supply elements of emergency lighting devices, said elements being selected preferably from uninterruptible power supplies (2), for supplying power to at least one respective lighting device of the type of a non-self-powered lamp (3a), devices (4) for managing the power delivered by the uninterruptible power supplies (2), first controllers (5) for the non-self-powered lamps (3a), second controllers (6) for the degree of charge of energy storage devices and for the functionalities of at least one lighting device of the type of a self-powered lamp (3b), **characterized in that** it comprises at least:
- an RS232 port, for connection, via a respective first transmission branch (8), to at least one respective RS232 port of the uninterruptible power supply (2);
- an RS485 port, for connection, via a respective second transmission branch (9), to at least one respective RS485 port of the second controller (6);
- an RS232/RS485 conversion function, for connection between the first controller (5) and the respective uninterruptible power supply (2) and/or for connection between said first branch (8) and said second branch (9);
- a microprocessor (10) provided with a software card for storing and analyzing data which are transmitted via said first branch (8) and said second branch (9) and convey information relating to the status of the elements and of the devices, to the available residual energy level, and to any operating problems for each device, and the like;
- means for connection to at least one interface (11), for displaying data of tests performed and the history of the events relating to each element, for their consequent centralized diagnosis and supervision.
